# EUROPEAN PATENT APPLICATION

(11) **EP 1 323 468 A1**
(43) Date of publication of application: **02.07.2003**
(21) Application number: 01131056.2
(22) Date of filing: 31.12.2001
(51) Int. Cl.: B01J 20/18, B01J 20/28, B01J 20/26, B01D 53/04, B01D 53/28, C02F 1/42, F25B 43/00

(54) **Adsorbing material comprised of porous functional solid incorporated in a polymer matrix**

(71) Applicant: Grace GmbH & Co. KG, 67545 Worms (DE)
(72) Inventor: Fritz, Hans-G., 73066 Uhingen (DE); Höfer, Hans H., 67593 Westhofen (DE); Hammer, Jochen, 70329 Stuttgart (DE)
(74) Representative: UEXKÜLL & STOLBERG

(57) **Abstract**

The present invention relates to an adsorbing material which comprises at least one porous functional solid, e.g. a zeolite, incorporated in a polymer matrix. The adsorbing material contains the porous functional solid in an amount of 45 to 80 wt.%. The polymer matrix comprises at least one organic polymer, particularly selected from thermoplastics, and has a secondary pore volume in addition to the primary pore volume of the porous functional solid. Further, the present invention is directed to a shaped article, which comprises or consists of the afore-mentioned adsorbing material, to a method for its preparation and to its use. The present invention is finally concerned with the use of specific rheological additives, in particular waxy components, which function as pore-forming agents in the preparation of shaped articles.

## Description

The present invention relates to an adsorbing material having an enhanced water adsorption capacity which comprises at least one porous functional solid incorporated in a polymer matrix, particularly selected from thermoplastics. It further relates to a shaped article which comprises or consists of the aforementioned adsorbing material, to a method for its preparation and to its use.

Known examples of porous functional solids are zeolites, as well as other alumino-silicates with functional properties, silica gels, silica-cogels as well as silica gels, silica-cogels which are coated or impregnated with or chemically bonded to functional chemical coumpounds. Functional activities mean specific and unspecific adsorption and desorption of molecules which are useful for any gas and liquid drying, enrichment or purification in a broad variety of industries such as chemical, petrochemical, gas and oil processing industries, fruit and beverage industry. Furthermore, they are applicable as desiccants and separating agents for analysis, preparation and drying processes in the diagnostic, pharmaceutical, cosmetic, and nutrition industries.

Porous functional solids are further employed as catalysts.

When these materials are provided as powders or as granulates which have a limited abrasion resistance and used in the form of fixed beds in bulk form on an industrial scale, dustlike abraded material obtained during operation impairs functioning of the process equipment.

It is known in the art to encapsulate solid particles, e.g. by using blends of an organic polymer which undergoes heat hysteresis during molding, e.g. polyethylene, and of a porous functional solid, which thus can be molded into various articles, e.g. a film or pellets. The organic polymer imparts to the molding composition certain plasticity, which in turn is a prerequisite for the subsequent shaping process.

US-A-5 432 214 discloses a dehydrating plastics material composition comprising, inter alia, 50 wt.% to 80 wt.% of one or more thermoplastic or thermosetting polymers and 20 to 50 wt.% of one or more dehydration agents which are preferably selected from silica gels and molecular sieves. When the polymer component of these mixtures is constituted by one or more thermoplastic polymer, transformation into solid structures of various shapes, e.g. hollow cylinders or plates, is preferably performed by extrusion. It is a disadvantage of this filled dehydrating plastics material that the amount of the polymer is relatively high (not less than 50 wt.%), whereas the amount of the dehydration agent is relatively low (not more than 50 wt.%) which results in a thick polymer film between the particles of the porous functional solid. The absorbing properties are therefore mainly determined by the water permeability of the polymer.

WO-A-9633108 discloses a container having desiccating abilities. The container comprises, inter alia, an insert formed from a desiccant entrained thermoplastic. The concentration of desiccant entrained within the insert may exeed 75%, but typically falls within a range of 40 to 75 wt.% desiccant to thermoplastic. Although such concentrations are considered to be high concentrations in the field of filled thermoplastics, the absorbing properties are still limited by the plastics matrix encapsulating the desiccant particles.

A series of US-Patents all to Hekal et al., e.g. US 6,174,952 B1, US 6,194,079 B1, and US 6,214,255 B1, discloses monolithic compositions comprising a water-insoluble polymer, a hydrophilic agent and an absorbing material. In one embodiment, an absorbing material entrained polymer is formed which is useful in the manufacture of containers and packaging for items requiring controlled environments. When the product is solidified, the hydrophilic agent forms interconnecting channels through which a desired composition is communicable to the water-absorbing material. These materials have the disadvantage that the adsorbate has to pass through the innerconnecting channels composed of the hydrophilic agent in order to reach the absorbing material. This impairs water adsorption kinetics as compared to the single use of the absorbing material.

Furthermore, the moisture uptake of the aforementioned polymer-based materials do not fulfill the requirements in applications such as pressure swing or thermal swing adsorbtion and vacuum adsorption. A further disadvantage of these materials is that they cannot be regenerated after completed loading.

It is generally known in the art that desirable characteristics such as durability and resistance to breakage of blends based on organic polymers filled with functional solid components tend to decrease at very high concentrations of the solid.

Another approach is to produce shaped articles from a reaction mixture which comprises zeolite, plasticizing agent and inorganic binders, i.e. siloxanes, as disclosed in WO-A-9949964. Such materials have a relatively high content of the zeolite, i.e. 40 to 90 wt.% (relative to the reaction mixture used for the production of the shaped bodies) and exhibit good water adsorption kinetics. However, cross-linking of the silicone matrix requires a sensitive temperature control of the reaction mixture. Calcining both at too high and too low temperatures can result in an insuffient compressive strength of the shaped articles. Whereas the use of thermoplastics or thermosetting materials allows a faster and safer reaching of the "green stability" prior to further process steps such as conveying and finishing by simply cooling down of the green body, inorganic bound fresh extrudates require a sensitive drying step. During this drying inorganic bound extrudates tend to shrink by up to 15% causing problems regarding shape fidelity. In many cases this shrinking causes breakage leading to unacceptable scrap rates.

Shaped articles made of organic polymers highly filled with porous functional solids which have equal water adsorption kinetics and compressive strengths than the materials produced from zeolite, plasticizing agent and inorganic binder are not yet commercially available.

The object of the present invention is therefore to provide an adsorbing material based on a polymer and a porous functional solid which has adsorption kinetics and compressive strengths comparable with materials produced from an inorganic binder and which can be regenerated after completed loading.

This object is achieved by an adsorbing material comprising at least one porous functional solid incorporated in a polymer matrix, said adsorbing material containing the porous functional solid in an amount of from 45 to 80 wt.% (relative to the weight of the finished and activated adsorbing material) and said polymer matrix comprising at least one organic polymer and having a secondary pore volume in addition to the primary pore volume of the porous functional solid.

The invention also provides a shaped article which comprises or consists of the adsorbing material according to the invention and a method for preparing such a shaped article.

The invention further is concerned with various uses of the shaped article, e.g. for drying, conditioning, purifying and separating gases, liquids and vapors.

Finally, the invention relates to the use of a removable rheological additive as a pore forming agent in the preparation of an adsorbing material comprising at least one porous functional solid incorporated in a polymer matrix comprising at least one organic polymer or in the preparation of a shaped article comprising or consisting of said adsorbing material.

Surprisingly, it has been discovered that adsorbing materials having a high concentration of porous functional solid (e.g. a zeolite) incorporated in a polymer matrix with an open pore structure have better adsorption kinetics compared with polymer-based materials known in the art. It is assumed that the porous structure of the polymer matrix facilitates transportation of the adsorbate, say water or gas molecules, and that adsorption properties are not so much influenced by the permeability of the polymer used. The extent of the seconday pore volume of the polymer matrix can also be adjusted easily, so that adsorbing materials are obtainable for applications where slow or fast adsorption kinetics are desired.

The adsorbing material according to the invention comprises at least one porous functional solid. Preferred porous functional solids are adsorbing agents, e.g. having gas-adsorbing or desiccating characteristics, which are particularly selected from amorphous and crystalline inorganic oxides, alkaline (Me⁺) and earth alkaline (Me²⁺) aluminum silicates, solid solutions thereof, Me⁺ and Me²⁺ aluminum silicates, wherein the Me⁺ and Me²⁺ are partly substituted with any suitable metal ion selected from transition elements, elements of the groups IIIA, IVA, VA and VIA of the periodic table and any combination thereof, solid solutions thereof, aluminum phosphates, Me⁺ and Me²⁺ aluminum phosphates, solid solutions thereof, Me⁺ and Me²⁺ aluminum phosphates, wherein Me⁺ and Me²⁺ are partly substituted with any suitable metal ion selected from transition elements, elements of the groups IIIA, IVA, VA and VIA of the periodic table and any combination thereof, solid solutions thereof, activated carbon and any combination of the aforementioned types of adsorbing agents. It is further preferred that the adsorbing agents are selected from framework silicates (as disclosed in *Deer, Howie & Zussman, The Rock Forming Minerals, 2*^{*nd*} *Edition, Longman Scientific & Technical, Harlow, Essex, England, 1993*), compositions with structures iso-type, respectively, iso-morphous to the aforementioned framework silicates, fly ash, pillared layered clays, amorphous and crystalline aluminum phosphates, silica gels, silica-cogels, amorphous alumina, amorphous titania, amorphous zirconia, activated carbon, and any combination thereof, but zeolites of the groups 1, 2, 3, 4, 5, 6 and 7 (according to *Donald W. Breck, Zeolite Molecular Sieves, Robert E. Krieger, Publishing Company, Malabar, Florida, 1984*), compositions with structures iso-type, respectively, iso-morphous to the aforementioned types of zeolites, silica gels, silica-cogels and any combination thereof being particularly preferred. The term "iso-type" and "iso-morphous" respectively are defined in *R.C. Evans, An Introduction to Crystal Chemistry, 2*^{*nd*} *Edition, Cambridge University Press, London, 1966.* Silica gels are the most preferred amorphous inorganic oxides. Among the crystalline inorganic oxides, zeolites of the groups 1, 2, 3, 4, 5, 6 and 7, compositions with structures iso-type, respectively, iso-morphous to the aforementioned types of zeolites or any mixture of these are preferred. Even more preferred examples of the aforementioned types of zeolites include members of the zeolite A family (e.g. 3A, 4A, 5A), zeolite X family, zeolite Y family (e.g. USY ultrastable Y, DAY de-aluminated Y), zeolite ZSM-5 including pure and doped Silicalite, Chabazite, ZSM-11, MCM-22, MCM-41, members of the aluminum phosphate family, compositions with structures iso-type, respectively, iso-morphous to the aforementioned types of zeolites, and any combination of these. Members of the zeolite families A, X and Y are most preferred.

It will be apparent to those skilled in the art that the above-mentioned porous functional solids can also be coated or impregnated with and/or chemically bonded to functional chemical compounds.

The amount of the porous functional solid is generally 45 to 80 wt.%, preferably 60 to 78 wt.% and more preferably 65 to 75 wt.% (relative to the total weight of the finished and activated adsorbing material).

In the adsorbing material according to the present invention at least one porous functional solid is incorporated in a polymer matrix, which comprises at least one organic polymer. Although any customary organic polymer which is compatible with the porous functional solid can be used, the organic polymer is preferably selected from thermoplastics. Preferred thermoplastics are selected from polyolefin (e.g. polyethylene or polypropylene), polystyrene, polyamide, polyamide imide, polyester, polyester amide, polycarbonate, ethylene-methacrylate copolymer, polyacrylic ester, polyacrylic acid, polyacetale, polyether sulphone, polyether ketone, polysulphone, polyethylene terephthalate, polybutylene terephthalate, liquid crystal polymer (LCP) and any combination thereof. Polyamide, polyether sulphone, polyolefin, polyamide imide, polyethylene terephthalate or any combination thereof are even more preferred. When the thermoplastic is a polyamide, it will preferably be a polyamide 66, polyamide 66/6, polyamide 46 or any combination thereof. Polyamide 66 is most preferred.

It is not necessary for the instant invention to select a polymer having a high permeability to the adsorbate, e.g. water, in order to obtain good adsorption kinetics. It will nevertheless be understood by those skilled in the art that polymers which exhibit good permeabilities towards the adsorbates advantageously affect the adsorption kinetics of the resulting adsorbing material.

Furthermore, the organic polymer can also be selected from one or more thermosetting polymers and/or one or more elastomers. In some instances, it is even possible that the polymer matrix is substantially composed of thermosetting polymers and/or of elastomers. A thermosetting polymer may e.g. be obtained by curing miscellaneous thermosetting resins such as, for example, epoxide and phenol/formaldehyde resins.

The amount of the organic polymer is generally 20 to 55 wt.% preferably 22 to 40 wt.% and more preferably 25 to 35 wt.% (relative to the total weight of the finished and activated adsorbing material).

In general, the organic polymers useful for the adsorbing material according to the invention must be low-viscous in order to be able to encapsulate a high load of the porous functional solid. Another requirement is that the organic polymer possesses a high thermal stability, so that it does not decompose during the activiation step of the green bodies. Preferred organic polymers have the following properties:
- the decomposition temperature is 180 to 450°C, more preferably 230 to 400°C and yet more preferably 250 to 380°C provided that the organic polymer is subjected to the heat treatment at said decomposition temperatures for a duration of at least 1h, preferably 1h to 36h; and/or
- the melting temperature is 100 to 390°C, more preferably 180 to 300°C and yet more preferably 220 to 270°C;

The adsorbing material according to the invention may further contain auxiliary agents, e.g. plastizicing enforcements agents, such as mineral oils, synthetic oils (e.g. silicon oils), natural waxes (e.g. paraffins), synthetic waxes, semi-synthetic waxes, and any mixture thereof. The amount of auxiliary agents in the adsorbing material is generally less than 20 wt.% (relative to the total weight of the finished and activated adsorbing material). Such auxiliary agents are added to the compound used in the manufacturing process of said material and are removed partly or completely in the manufacture.

The polymer matrix of the adsorbing material according to the invention wherein the porous functional solid is incorporated has a secondary pore volume. The latter is in addition to the primary pore volume of the porous functional solid. The secondary pore volume, i.e. the additional pore structure of the polymer matrix, is given by the pore volume and the pore size distribution as both determined by mercury intrusion measurements, where the amount of mercury intruded into the pores under varying pressures is a measure for both the pore volume and the pore size distribution in the polymer matrix accessible for the adsorbates, e.g. using a Micromeritics Autopore 9405 executing a standard protocol for the evaluation of meso- and macro pores. Advantageously, the secondary pore volume may be varied broadly, e.g. with respect to the amount and diameter of the pores, and can be affected by a number of parameters, which will be discussed later in connection with the method of the present invention. Typical secondary pore volumes are in the range of 0.1 to 0.6 ml/g. The corresponding secondary pore diameters are in the range of 4nm to 3000 nm. The open pore structure of the polymer matrix enhances the transport of an adsorbate (e.g. water or gas molecules) to the interface with the porous functional solid (e.g. a zeolite), which allows an easy and quick mass transfer to and from said solid. In contrast, typical primary pore volumes of the porous functional solid are in the range of 0.3 ml/g to 10 ml/g, and the corresponding primary pore diameters are in the range of 0.3 nm to 10 nm. Such narrow pores are only detectable by methods other than mercury intrusion measurements, e.g. by gas adsorption methods (BET), using measurement systems such as Micromeritics ASAP 2400 with a protocol for measuring micro to meso pores.

The shaped article which comprises or consists of the adsorbing material according to the invention may have any suitable geometry, such as a tube, a cylinder, a bead, a tablet, a ring, a sheet or the like. Preferably, it has a honey-combed geometry. Honey-combed articles with a high cell density have an extremely large surface area compared with other shaped articles, for example in the form of sheets, as a result of which the catalytic and adsorptive properties, in particular the adsorption kinetics, are drastically improved. Finally, the chosen shape may also be determined by the designation of the desiccant. In case of fast kinetics honeycomb structures are preferred. In case of a high equilibrium capacity denser structures such as bars, cylinders, rods, tablets, beads, sheets or any other geometry as achievable with shaping and moulding equipment as known in polymer technology are useful.

The adsorbing material or the shaped article according to the invention both exhibit excellent water adsorption kinetics and mechanical properties, which has not yet been achieved by dehydrating plastic materials, even if they are highly filled with a porous functional solid.

Preferably, the equilibrium water adsorption capacity as measured in a climate cabinet at a relative humidity of 80% and at a temperature of 25°C relative to the weight of the finished and activated absorbing material or shaped article is from 18 wt.% to more than 22 wt.% and more preferably from 19 wt.% to more than 21 wt.%. The equilibrium load can be achieved within periods ranging from fractions of an hour up to several days, depending on process temperature, partial pressure of the adsorbate and the shape of the desiccant body. Honeycomb structures exhibit the fastest kinetic, cylinders and spheres the slowest. For other types of desiccants different values are achieved according to their specific equilibrium capacities.

The shaped articles according to the invention preferably have a compressive strength of 150 N/mm² or higher, more preferably 80 N/mm² or higher and yet more preferably 50 N/mm² or higher as measured by tensile/compressive testing machine model 1455 from Zwick with a 20 kN gauge from Zwick and a piston displacement rate of 1 mm/min.

The method according to the invention for preparing the shaped article comprises the following steps:
a) forming a compound comprising at least one porous functional solid, at least one organic polymer and at least one removable rheological additive;
b) shaping said compound into a green body;
c) substantially or at least partially removing said rheological additive from the green body; and
d) optionally activating the green body obtained from step c) at a temperature of at least 90°C.

The porous functional solids and the organic polymers used in the mixture of step a) are those already discussed in connection with the adsorbing material according to the invention.

The function of the organic polymer is that of a host material (polymer matrix) which encapsulates the porous functional solid. The organic polymer also allows providing a processible blend with the porous functional solid, which can be shaped into a broad variety of articles.

The compound of step a) further contains at least one removable rheological additive which simultaneously serves as pore forming agent as will be described in more detail below in connection with step c). In a preferred embodiment the removable rheological additive is selected from waxy components and/or oils. In general, any customary waxy component which is compatible with the organic polymer used can be employed, being preferably selected from natural waxes (e.g. beeswax, paraffin waxes), semi-synthetic waxes (e.g. montan waxes), synthetic waxes (e.g. polyolefin waxes, ethylene-vinyl acetate copolymer, ethylene-vinyl alcohol, polyolefin glycols, amide wax), modified, oxidized or microcrystalline forms of the aforementioned waxes and any combination of these. According to a preferred embodiment the waxy component comprises at least one nonpolar and at least one polar waxy component. Preferred examples of nonpolar waxy components are polyolefin waxes and paraffin waxes. Among the polar waxy components polyethylene glycols, oxidized polyolefin waxes, ethylene-vinyl acetate copolymer, ethylene-vinyl alcohol and any combination of these are preferred. Suitable oils include mineral oils, synthetic oils (e.g. silicon oils) or any combination thereof.

It is particularly advantageous for the method according to the present invention that the removable rheological additive, e.g. a waxy component, has a lower evaporation and/or decomposition temperature than the organic polymer used for the polymer matrix. Preferred evaporation and/or decomposition temperatures of the removable rheological additive are from 140°C to 300°C, preferably from 160°C to 240°C and more preferably from 180°C to 220°C provided that the removable rheological additive is subjected to the heat treatment at said evaporation and/or decomposition temperatures for a duration of at least 1h, preferably 1h to 36h.

For example, suitable polyolefin waxes have one or more of the following properties: a molecular weight of 3000 g/mol to 20000 g/mol, viscosities of 20 mPas to 10000 mPas, drop points of 50°C to 160°C, and evaporation and/or decomposition temperatures of 140°C to 280°C. Suitable polyethylene glycols have one or more of the following properties: a molecular weight of 10000 g/mol to 30000 g/mol, viscosities of 300 mPas to 10000 mPas, drop points of 50°C to 160°C, and evaporation and/or decomposition temperatures of 140°C to 280°C.

The removable rheological additive used in the method according to the invention also serves as lubricant, which is added to influence the rheological properties of a molding composition. In order to achieve a uniform distribution, the latter disadvantageously requires a high introduction of shear and hence long kneading times in the production process. It was totally surprising that certain rheological additives can be used as pore forming agents when they are removed from the resulting shaped article by suitable methods and hence generate an open pore structure in the hosting organic polymer.

Preferable amounts of the above-mentioned components in the compound of step a) used for the preparation of the shaped article according to the invention, which can be selected independently of one another, are as follows each relative to the total weight of the compound:
- 40 to 70 wt.%, more preferably 55 to 68 wt.% and yet more preferably 60 to 65 wt.% porous functional solid;
- 20 to 50 wt.%, more preferably 20 to 35 wt.% and yet more preferably 20 to 25 wt.% organic polymer; and
- 0.5 to 25 wt.%, more preferably 5 to 20 wt.% and yet more preferably 10 to 15 wt.% removable rheological additive.

Optionally, the compound in step a) further contains auxiliary agents, e.g. chemical blowing agent, starch and methylcellulose.

The amount of auxiliary agents is preferably 0 to 5 wt.% relative to the total weight of the compound.

The term "forming a compound" covers the combining of the aforementioned components of the compound in any order and optionally the subsequent homogenizing. The temperature applied in step a) depends on the melting point of the matrix polymer. In case of mixtures of two or more polymers the melting temperature of the highest melting polymer is to be used.

In a possible further step the porous functional solid may be functionalized by impregnating, coating and/or coupling suitable chemical compounds onto the corresponding inner pore surfaces.

In step b) the above-mentioned compound is shaped into a green body. Although any shaping techniques as known from both the ceramic and the polymer processing industries can be employed, shaping is preferably performed by extrusion or injection moulding. The extrusion can be carried out in a single- or twinscrew extruder or less preferred in a ram extruder. Injection molding may sequentially comprise steps a) and b), or in a single stage process applying an injection molding compounder.

Step a) and step b) of the method according to the invention are preferably carried out continuously. This continuous procedure, i.e. forming a compound of the individual recipe components and shaping of the molding composition can take place in one step. It can be carried out, for example, using a co-rotating twin-screw-extruder. In this concept, the densely combining co-rotating twin-screw-extruder functions simultaneously as mixing unit and pressure generator for extrusion of the extrudates. In the case of components present in powder or granulate form (e.g. organic polymer, removable rheological additive and porous functional solid), the individual components of the compound are added to the process by a gravimetric feeder. In case of liquid additives a dosage pump has to be attached to the compounding zone. In an appropriate manner, the solid components are dried prior to compounding in order to avoid any downstream process malfunction. Continuous production of the shaped articles by the method according to the invention considerably increases the profitability of the overall process. This avoids adding the compound of step a) to an extruder in an additional step. Furthermore, the molding material already comprising the organic polymer and the porous functional solid does not have to be granulated and melted again in a single-screw-extruder. These additional steps are expensive and, under certain circumstances, may lead to water contamination of the compound resulting into changes of the rheological properties of the compound (storage time).

In step c) of the method according to the invention the rbeological additive is substantially or at least partially removed from the green body. This process step generates meso- and macro-pores and transforms the former dense blend comprising a polymer, a porous functional solid and a rheological additive into a highly porous system with the desired pore structures of the functional solids and an open pore structure of the polymer matrix. This enables an easier and quicker mass transfer to and from the porous functional solid in comparison to polymer-based materials known in the art. Consequently, the rheological additive simultaneously serves as pore forming agent, which adjusts the porous structure of the polymer host. The use of such pore forming agents by amount and chemical nature allows covering a broad variety of meso- and macro-pores in the hosting polymer.

The rheological additive is preferably removed by heat treatment, e.g in atmosphere, under an inert gas blanket or under vacuum, extraction, particularly solvent extraction, and any combination thereof. The rheological additive, i.e. the pore forming agent, is added to the compound of step a) in relatively large amounts. It is preferred that it evaporates and/or decomposes more easily, e.g. by heat, than the organic polymer during steps a) and b) of the method according to the invention. In such a case the rheological additive is preferably removed from the green body by heat treatment. It will be understood by those skilled in the art that the temperature and duration of the heat treatment depends upon a number of parameters, e.g. the type of the rheological additive and the organic polymer as well as the geometry of the shaped article. A preferred heat treatment, however, is carried out at temperatures of 140°C to 300°C, more preferably from 160°C to 240°C and yet more preferably from 180°C to 220°C. Preferred heat treatment periods are from 1 h to 36 h, more preferably 8 h to 24 h and yet more preferably 12 h to 24 h.

If pore formation is achieved by evaporation and/or decomposition of the removable rheological additive, there must be a sufficient difference between the evaporation and/or decomposition temperatures of the removable rheological additives and of the organic polymer, i.e. the evaporation and/or decomposition temperature of the rheological additive must be sufficiently lower to avoid evaporation and/or decomposition of the organic polymer. The evaporation and/or decomposition of the rheological additive preferably takes place at a low rate of heating, so that the exothermal oxidation reaction runs slowly. This is intended to avoid an impairment of the organic polymer caused by a violent temperature increase.

In cases where the rheological additives have a similar thermal stability compared with the organic polymer, it is necessary to remove said rheological additive by other methods than heat treatment while extraction, particularly solvent extraction, being preferred. Suitable extracting solvent or a mixture of extracting solvents, the temperature and duration of extraction depend upon, inter alia, the specific combination of the organic polymer and the removable rheological additive as well as upon the geometry of the green body. Proper choice of said combination is particularly important for the instant invention, because the organic polymer and the rheological additive must not be removed simultaneously from the green body. Suitable combinations, e.g. comprising polyamide 66, polyolefin waxes and polyethylene glycols, are later discussed in the examples.

If waxy components are used as the removable rheological additive in the method according to the invention, pore formation can preferably be achieved by solvent extraction of the aforementioned polar waxy components. In principle non-polar waxy component can be extracted, too, but the non-polar solvents suitable for their extraction are more difficult to handle than polar solvents used for the extraction of polar waxy components. Examples of preferred polar extracting solvents are water, C₁ to C₆ alcohols (e.g. ethanol), C₃ to C₈ ketones (e.g. acetone) and any combination thereof. Preferred non-polar extracting solvents are C₅ to C₁₂ hydrocarbons and aromatics (e.g. xylene) and any combination thereof. In some instances of the present invention, it may be advantageous that the extracting solvent further comprises at least one emulsifier, preferably selected from surfactants (e.g. alkyl emulsifier, aromatic emulsifier) separated in anionic-, cationic, non-ionic emulsifiers with lipophilic, hydrophilic end or intermediate groups. In a further preferred embodiment, solvent extraction is optionally supported by ultrasonic treatment. Preferably, solvent extraction is carried out at temperatures of 20°C to 120°C, more preferably from 50°C to 90°C and yet more preferably from 60°C to 80°C. Preferred extraction periods are from 1 h to 36 h, more preferably 8 h to 24 h and yet more preferably 12 h to 24h.

Generally, the green body obtained from step c) is already activated after heat treatment, but may optionally be activated at a temperature of at least 90°C in a further step d), preferably at temperatures of 90°C to 240°C. Preferred activation periods are from 2 h to 8 h. For example, activation can be carried out at atmosphere, at dry gas atmosphere, under an inert gas blanket, or under vacuum. When pore formation is only achieved by measures other than by heat treatment, e.g. by extraction, activation of the green body obtained from step c) is obligatory. Optimally, the green body is then activated at temperatures from 90 °C to 240 °C, preferably from 90 °C to 220°C and more preferably from 160 to 220°C, e.g. at atmosphere, at dry gas atmosphere, under an inert gas blanket, or under vacuum. In such a case, preferred activation periods are from 1 h to 8 h, more preferably from 1 h to 6 h and yet more preferably from 1 h to 4 h.

Furthermore, the invention relates to the use of the shaped articles according to the invention for drying, conditioning, purifying and separating gases, liquids and. vapors. Shaped articles used in such a way can be regenerated either by alternating pressure processes, heat treatment or cleaning with solvents and subsequent drying.

The shaped articles according to the invention can be used, for example, for gas drying, separation, and purification. The gases can be compressed and non-compressed. Fixed beds made up by the shaped articles according to the invention are positioned in at least two or more adsorber vessels. At least one adsorber vessel is in the adsorption mode whereas simultaneously at least one other adsorption vessel is in the desorption mode. This scheme is applicable for temperature swing, pressure swing and vacuum swing adsorption.

The shaped articles according to the invention can be used, for example, in order to build a RotoAdsorber (adsorption wheel) for gas conditioning. The regeneration is executed using hot purge gas (temperature swing adsorption).

The shaped articles can likewise be used for drying compressed air. The moisture entering the compressed air system with fresh air condenses during compression/decompression and can impair functioning of the system due to subsequent corrosion. By incorporating the shaped articles according to the invention as an adsorbent, the water can thus be removed from air-brake system, pneumatic drives and controls. A corrosion can therefore be suppressed.

The shaped articles according to the invention can furthermore be used for refrigerant drying in both CFC-based and CFC-free refrigeration units. Since the moisture pick up capacity of the shaped articles according to the invention allows a lifetime of 15 years and beyond, no regeneration of the shaped article according to the invention is necessary.

The shaped articles according to the invention can also be used as desiccants for pharmaceutical and nutrition packaging, such as bottle stoppers and as desiccants for cartridges and boxes containing diagnostics.

The shaped articles according to the invention can also be used for desulfurization (suppression of smell) of liquid hydrocarbons as spray car. propellant gas (e.g. butane). Regeneration is irrelevant here

A further application of the shaped articles according to the invention is to be seen in air separation units, in which nitrogen adsorbed and enrichment of oxygen, e.g. of respiratory air, takes place as a result. Regeneration can be carried out by heat.

Furthermore, the shaped articles according to the invention may be used in air-conditioning units. In these, the adsorption and de-sorption enthalpies in combination with evaporation and condensation enthalpies are utilized to generate heat or to cool.

The shaped articles according to the invention can be used for purifying hydrogen as used in fuel cells. The methanol reformation generates hydrogen and byproducts such as CH₄, H₂O, CO, and CO₂. These byproducts are undesired since they either act as electrode poison or dilute the energy density of the hydrogen. These byproducts can be removed applying pressure/ vacuum swing adsorption.

The shaped articles according to the invention can be employed as ion exchangers in water-softening units, in which the desired effect is achieved by a calcium-sodium exchange.

The following examples illustrate the present invention. If not otherwise indicated, all percentages relate to weight.

### Examples

The present invention describes a desiccant bound in a porous polymer matrix with a secondary pore structure additional to primary pore structure of the porous functional solid.

As examples 4A-zeolite powders, SP 7-8968 from W.R. Grace, were compounded with polyamide 66 (Ultramid A3SK, BASF AG) as polymer matrix with good water permeability and temperature stability, and wax mixtures consisting of polyolefins and polyethylen glycols (Licomont TP EK 583 and Polyglykol 20000, Clariant), as removable rheological additives. In total five compounds with varying concentrations have been prepared and evaluated. Table 1. depicts these five different compounds made of the aforementioned components.

**Table 1:**

| Recipes before und after de-waxing. | | | | | |
|---|---|---|---|---|---|
| Ex. No. | Zeolite 4A [wt%] | Ultramid A3SK [wt%] | Licomont TP EK 583 [wt%] | Polyglykol 20000 [wt%] | Max. zeolite content after de-waxing [wt%] |
| 1 | 63.2 | 26.3 | 10.5 | - | 70.6 |
| 2 | 64.5 | 24.7 | 10.8 | - | 72.3 |
| 3 | 68.4 | 20.2 | 11.4 | - | 77.2 |
| 4 | 63.2 | 21.1 | 10.5 | 5.2 | 75 |
| 5 | 65.0 | 20.0 | 10.0 | 5.0 | 76.5 |

In Table 1 the columns 2 to 5 refer to the compounds prior to shaping, whereas the zeolite contents as given in column 6 refer to the shaped and activated articles.

Each single recipe component was processed in dry conditions in order to prevent malfunctions in the downstream process. The compounding was executed in a co-rotating twin-screw-extruder ZSK 25 from Coperion Werner & Pfleiderer with 250 1/min screw speed and a cylinder cabinet temperature of 275°C. The granulate achieved by extrusion was milled and formed to standardized test sheets using a pilot plant press from Dr. Collin GmbH. The test sheets were pressed with a pressure of 220 bar and at a temperature of 280°C. The aforementioned test sheets were 2.5 mm thick, 12.7 mm wide and 63 mm long.

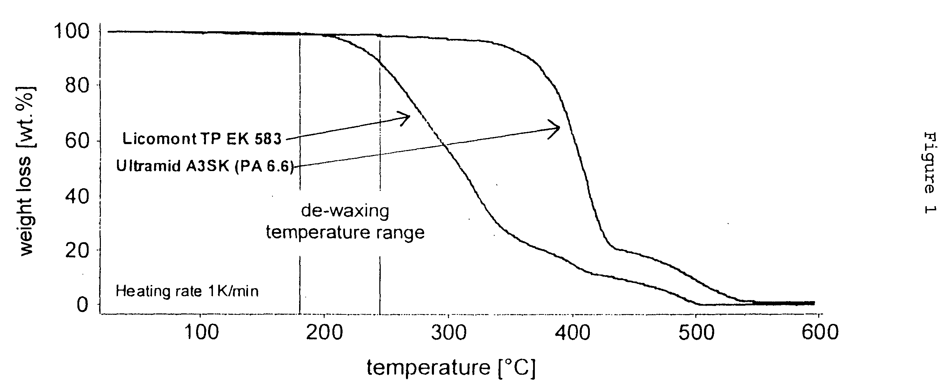

**Fig. 1** shows decomposition curves of the applied polyamide 66 (Ultramid A3SK) and wax (Licomont TP EK 583) in dependence of the temperature, determined by temperature gravimetric analysis. The decomposition of the wax Licomont TP EK 583, which consists of a polyolefin wax/polyether glycol wax mixture, started at a significant lower temperature than the polyamide 66. This temperature window ranging from 180°C to 260°C was used to generate pores in the polyamide 66 matrix.

In the de-waxing step, a combination of extraction and heat treatment was applied. The aforementioned test sheets were processed for 24 h at 80°C in an ultrasonic bath with ethanol as extracting solvent. Subsequently, the test sheets were thermally treated for 4 h at 220°C in a furnace. No further activation of the test sheets was carried out.

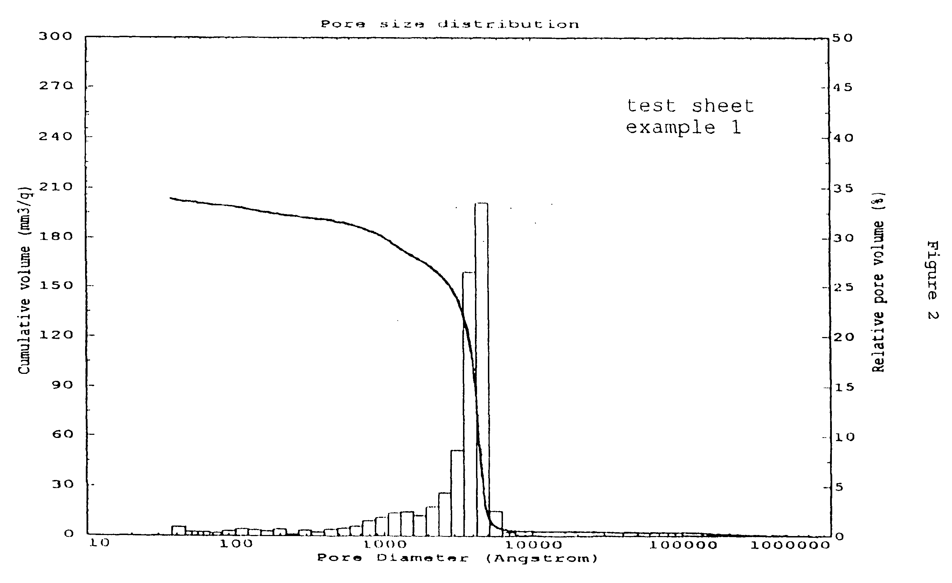

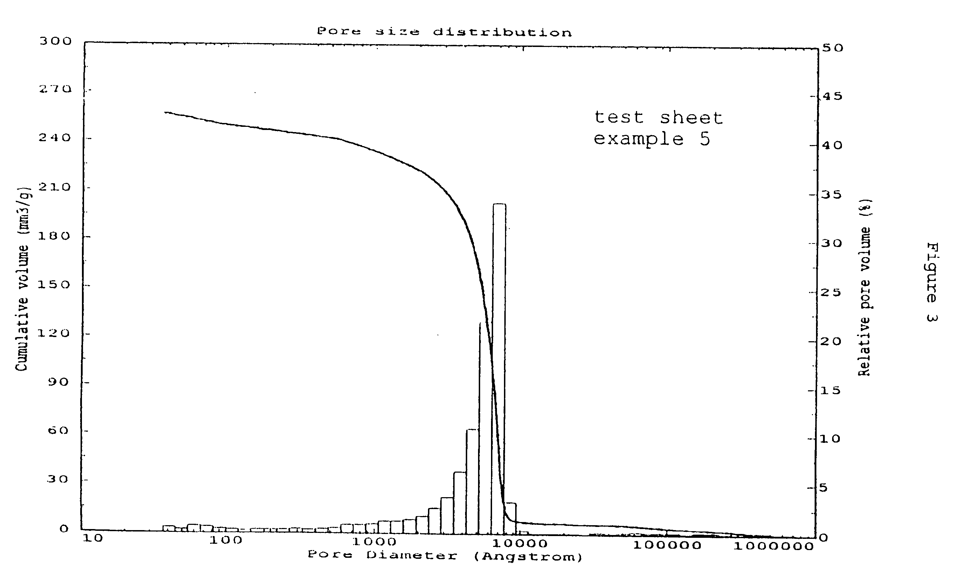

**Figs. 2 and 3** show the secondary pore volumes and pore size distributions of two of the test sheets produced above (Ex. No. 1 and No. 5 in Table 1.). The secondary pore volumes and pore size distributions were determined by mercury intrusion measurements using a Micromeritics Autopore 9405 executing a standard protocol for the evaluation of meso- and macro pores. It can be seen that the high wax content of the compound used for the preparation of the test sheet of Ex. No. 5 corresponds to a significantly higher cumulative pore volume and slightly broader pore size distribution. In contrast, when the compound with a lower wax content was used (preparation of the test sheet of Ex.

No. 1), a lower cumulative pore volume and a narrower pore size distribution were obtained.

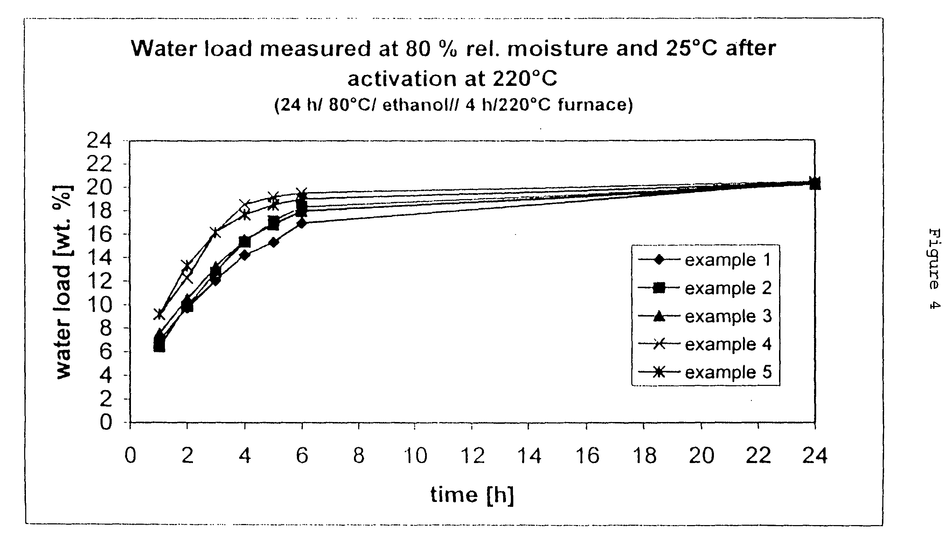

**Fig. 4** shows the time dependent water adsorption curves of the aforementioned test sheets made after recipes Ex. No.1 to No. 5. The test sheets with the higher cumulative secondary pore volume (e.g. Ex. No. 5) have a better water adsorption kinetic than those with the lower cumulative pore volume (e.g. Ex. No. 1), indicating that the secondary pore structure acts as transport system. Ex. No. 4 and 5 additionally using Polyglykol 20000 show the best kinetics and the best short term water adsorption capacities. The fact that for all 5 recipes the equilibrium capacity after 24 h was about the same may be attributed to the additional water adsorption capability of polyamide 66.

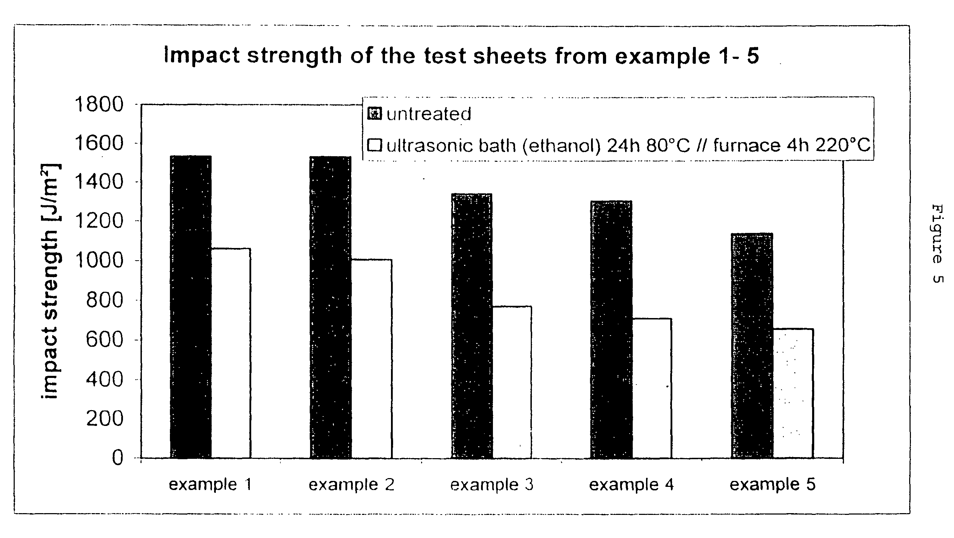

**Fig. 5** displays the impact strengths of untreated and activated test sheets made from recipes Ex. No. 1 to 5. It is demonstrated that the untreated sheets show a significantly higher mechanical stability than the treated ones. The decrease of strengths of sheets according to recipes Ex. No. 1 to No. 5 correlate to a decrease in polyamide 66 and an increase in wax concentrations. The activated test sheets showed impact strength values from 660 J/m² to 1060 J/m². The mechanical stability is strongly correlated to the porosity as introduced by the de-waxing step. The higher the cumulative pore volume, the lower the impact strength.

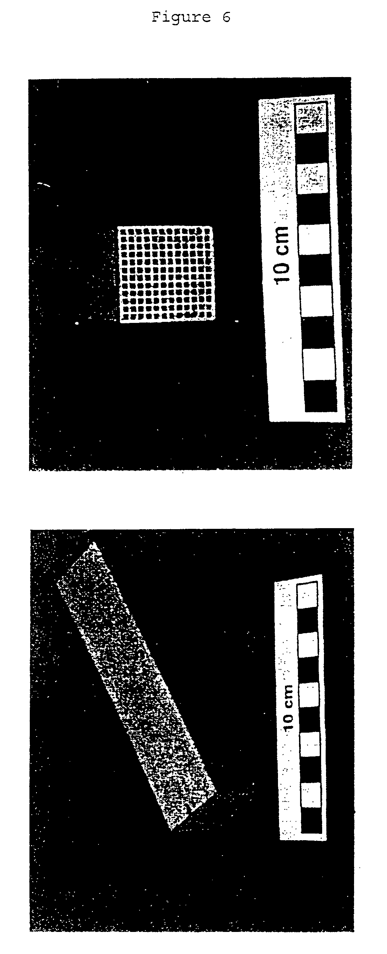

Apart from the above test sheets honeycomb structures were produced as shown in **Fig.6**. In this case the moulding compound, produced by means of a twin-screw-extruder, were processed directly to the honeycomb structures. The shaping (moulding) process was carried out on a single-screw-extruder from Dr. Collin GmbH with a screw diameter of 30 mm and a screw speed 30 1/min. The cylinder cabinets temperatures of the extruder were 275°C and the honeycomb extrusion die temperature 280°C. The in that kind produced honeycomb structures had a channel width of 1.6 mm, a wall thickness of 0.8 mm and cross section of 30x30 mm². The cell density of these honeycomb structures is approximately 100 cpsi (cells per square inch).

## Claims

1. An adsorbing material comprising at least one porous functional solid incorporated in a polymer matrix, said adsorbing material containing the porous functional solid in an amount of 45 to 80 wt.% relative to the weight of the finished and activated adsorbing material, and said polymer matrix comprising at least one organic polymer, and having a secondary pore volume in addition to the primary pore volume of the porous functional solid.

2. An adsorbing material according to claim 1, wherein the amount of the organic polymer is 20 to 55 wt.% relative to the weight of the finished and activated adsorbing material.

3. An adsorbing material according to claim 1 or 2, wherein the porous functional solid is an adsorbing agent.

4. An adsorbing material according to claim 3, wherein the absorbing agent is selected from zeolites of the groups 1, 2, 3, 4, 5, 6 and 7, compositions with structures iso-type, respectively, iso-morphous to the aforementioned types of zeolites, silica gels, silica-cogels and any combination thereof.

5. An adsorbing material according to claim 4, wherein the zeolites of the groups 1, 2, 3, 4, 5, 6 and 7 are selected from the members of the zeolite families A, X and Y.

6. An adsorbing material according to any of claims 1 to 5, wherein the decomposition temperature of the organic polymer is 180 to 450°C, preferably 230 to 400°C and more preferably 250 to 380°C, provided that the organic polymer is subjected to heat treatment at said decomposition temperatures for a duration of at least 1h.

7. An adsorbing material according to any of claims 1 to 6, wherein the melting temperature of the organic polymer is 100 to 390°C, preferably 180 to 300°C and more preferably 220 to 270°C.

8. An adsorbing material according to any of claim 1 to 7, wherein the organic polymer is selected from thermoplastics.

9. An adsorbing material according to claim 8, wherein the thermoplastics are selected from a polyamide, polyether sulphone, polyolefin, polyamide imide, polyethylene terephthalate and any combination thereof.

10. An adsorbing material according to claim 9, wherein the polyamide is a polyamide 66, polyamide 66/6, polyamide 46 or any combination thereof.

11. A shaped article comprising or consisting of an adsorbing material as defined in any of claims 1 to 10.

12. A shaped article according to claim 11 having a water adsorption capacity as measured at 80% relative humidity and at 25°C of at least 18 wt.% (relative to the weight of the finished and activated shaped article).

13. A shaped article according to claim 11 or 12 having a compressive strength of 150 N/mm² or higher, preferably 80 N/mm² or higher and more preferably 50 N/mm² or higher as measured by tensile/compressive testing machine model 1455 from Zwick with a 20 kN gauge from Zwick and a piston displacement rate of lmm/min.

14. A shaped article according to one of claims 11 to 13 having a honeycombed geometry.

15. A method for preparing a shaped article as defined in any of claims 11 to 14, said method comprising the steps of:
a) forming a compound comprising at least one porous functional solid, at least one organic polymer and at least one removable rheological additive;
b) shaping said compound into a green body;
c) substantially or at least partially removing said rheological additive from the green body; and
d) optionally activating the green body obtained from step c) at a temperature of at least 90°C.

16. A method according to claim 15, wherein the compound of step a) comprises 40 to 70 wt.% of porous functional solid, 20 to 50 wt.% of organic polymer and 0.5 to 25 wt.% of removable rheological additive, in each case relative to the weight of the total compound.

17. A method according to claim 15 or 16, wherein the removable rheological additive has an evaporation and/or decomposition temperature of 140°C to 300°C, preferably from 160°C to 240°C and more preferably from 180°C to 220°C, provided that the removable rheological additive is subjected to heat treatment at said evaporation and/or decomposition temperatures for a duration of at least 1h.

18. A method according to any of claims 15 to 17, wherein the removable rheological additive is selected from waxy components and/or oils.

19. A method according to claim 18, wherein the waxy component is selected from natural waxes, semi-synthetic waxes, synthetic waxes, modified, oxidized or microcrystalline forms of the aforementioned waxes and any combination of these.

20. A method according to claim 18 or 19, wherein the waxy component is a synthetic wax, preferably a polyolefin wax, ethylene-vinyl acetate copolymer, ethylene-vinyl alcohol, polyolefin glycol, amide wax or any combination of these.

21. A method according to any of claims 15 to 20, wherein steps a) and b) are carried out continuously.

22. A method according to any of claims 15 to 21, wherein in step b) shaping of said compound into said green body is performed by extrusion or injection molding.

23. A method according to any one of claims 15 to 22, wherein in step c) the rheological additive is removed by heat treatment, extraction, particularly solvent extraction, and any combination of these.

24. A method according to claim 23, wherein heat treatment is used for removing the rheological additive.

25. A method according to claim 24, wherein the heat treatment is carried out a at temperature of 140°C to 300°C, preferably 160°C to 240°C and more preferably 180°C to 220°C.

26. A method according to claim 24 or 25, wherein the heat treatment period is from 1 h to 36 h, preferably from 8 to 24 h and more preferably from 12 to 24 h.

27. A method according to claim 23, wherein solvent extraction is used, optionally supported by ultrasonic treatment.

28. A method according to claim 27, wherein the solvent extraction is carried out at a temperature of 20°C to 120.°C, preferably 50°C to 90°C and more preferably 60°C to 80°C.

29. A method according to claim 27 or 28, wherein the solvent extraction period is from 1 h to 36 h, preferably from 8 to 24 h and more preferably from 12 to 24 h.

30. A method according to one of claims 27 to 29, wherein the extracting solvent is selected from water, C₁-C₆ alcohols, C₃-C₈ ketones and any combination thereof.

31. A method according to claim 30, wherein the extracting solvent further comprises at least one emulsifier'.

32. A method according to any of claims 27 to 31, wherein the green body obtained from step c) is further activated at a temperature from 90 °C to 240 °C, preferably from 90 °C to 220°C and more preferably 160 to 220°C.

33. A method according to claim 32, wherein the activation period is from 1 h to 8 h, preferably from 1 h to 6 h and more preferably from 1 h to 4 h.

34. Use of a shaped article as defined in any of claims 11 to 14 or prepared by a method as defined in any of claims 15 to 33 for drying, conditioning, purification and separation of gases, vapors and liquids, the loaded shaped article preferably being regenerated either by thermal treatment, by an alternating pressure process, or by rinsing with water, any other solvent, extraction with any solvent and subsequent drying.

35. Use of a shaped article as defined in any of claims 11 to 14 or prepared by a method as defined in any of claims 15 to 33 in a non-regenerative operating procedure, in particular in the drying of the refrigerant in a closed circulation.

36. Use of a shaped article as defined in any of claims 11 to 14 or prepared by a method as defined in any of claims 15 to 33 in a non-regenerative operating procedure, in particular in the drying of packed products, including food, drugs, pharmaceuticals, diagnostics and cosmetics, more specifically as desiccants and moisture scavengers in drug bottles and containers, and boxes and cartridges to store and spend diagnostics, placed in or attached to the bottles, containers, boxes and cartridges, or being integrated part of them.

37. Use of a shaped article as defined in any of claims 11 to 14 or prepared by a method as defined in any of claims 15 to 33 for desulfurization of gases, in particular propellants for spray cans, preferably butane, wherein the sulfur-containing compound is preferably adsorbed by the shaped article.

38. Use of a shaped article as defined in any of claims 11 to 14 or prepared by a method as defined in any of claims 15 to 33 as a nitrogen adsorber in an air separation unit, in particular for generating oxygen-enriched respiratory air.

39. Use of a shaped article as defined in any of claims 11 to 14 or prepared by a method as defined in any of claims 15 to 33 in combination with a methanol reformer as hydrogen purifier as useful for fuel cells.

40. Use according to claim 39, wherein the shaped article adsorbs the byproducts from the methanol reforming process such as CH₄, H₂O, CO, and CO₂.

41. Use according to claim 39 or 40, wherein said byproducts can be removed applying pressure/ vacuum swing adsorption, or less preferred by thermal treatment.

42. Use of a shaped article as defined in any of claims 11 to 14 or prepared by a method as defined in any of claims 15 to 33 in air-conditioning units as an adsorber/desorber, wherein the adsorption and evaporation enthalpies are utilized in particular for heating and cooling.

43. Use of a shaped article as defined in any of claims 11 to 14 or prepared by a method as defined in any of claims 15 to 33 in water-softening units which operate by the principle of calcium-sodium ion exchange, wherein the ion exchange takes place, in particular, in the shaped article.

44. Use of a removable rheological additive as a pore forming agent in the preparation of an adsorbing material comprising at least one porous functional solid incorporated in the polymer matrix containing at least one organic polymer or in the preparation of the shaped article comprising or consisting of said adsorbing material.

45. Use according to claim 44, wherein the evaporation and/or decomposition temperature of the removable rheological additive is from 140°C to 300°C, preferably from 160°C to 240°C and more preferably from 180°C to 220°C, provided that the removable rheological additive is subjected to heat treatment at said evaporation and/or decomposition temperatures for a duration of at least 1h.

46. Use according to claim 44 or 45, wherein the removable rheological additive is selected from waxy components and/or oils.
